# EUROPÄISCHE PATENTSCHRIFT

(11) **EP 4 534 379 B1**
(45) Veröffentlichungstag und Bekanntmachung des Hinweises auf die Patenterteilung: **01.04.2026**
(21) Anmeldenummer: 23201514.9
(22) Anmeldetag: 04.10.2023
(51) Int. Cl.: B61D 19/00, B61D 19/02, B60J 5/06, E05D 15/10, E05F 15/649

(54) **SCHWENKSCHIEBETÜRSYSTEM**
PIVOTING AND SLIDING DOOR SYSTEM
SYSTÈME DE PORTE COULISSANTE ET PIVOTANTE

(43) Veröffentlichungstag der Anmeldung: 09.04.2025
(73) Patentinhaber: ULTIMATE Europe Transportation Equipment GmbH, 3304 St. Georgen am Ybbsfelde (AT); Teufl, Manfred, 3332 Rosenau (AT)
(72) Erfinder: Teufl, Manfred, 3332 Rosenau (AT); Schmalwieser, Daniel, 3323 Neustadtl an der Donau (AT)
(74) Vertreter: KLIMENT & HENHAPEL

(56) Entgegenhaltungen:
- EP-A1- 0 312 450
- DE-U1- 202016 101 709

## Beschreibung

### GEBIET DER ERFINDUNG

Die vorliegende Erfindung betrifft ein Schwenkschiebetürsystem für ein Fahrzeug, insbesondere Schienenfahrzeug, umfassend ein sich in einer Ebene erstreckendes Türblatt, welches von einer Geschlossenstellung in eine Freigabestellung und umgekehrt mittels eines Schwenkmechanismus bewegbar ist, wobei die Geschlossenstellung und die Freigabestellung voneinander in einer ersten Richtung, die normal auf die Ebene des Türblatts steht und von der Geschlossenstellung zur Freigabestellung weist, beabstandet sind, wobei das Türblatt in der Freigabestellung parallel zu einer normal auf die erste Richtung stehenden zweiten Richtung verschiebbar ist und wobei der Schwenkmechanismus eine Drehsäule umfasst, die entlang einer normal auf die erste Richtung und auf die zweite Richtung stehenden dritten Richtung verläuft und um eine erste Drehachse drehbar ist, die parallel zur dritten Richtung ist, wobei der Schwenkmechanismus weiters einen Schwenkarm und ein Antriebssystem für den Schwenkarm umfasst, wobei der Schwenkarm an der Drehsäule um diese drehbar gelagert ist und über einen Endbereich in Wirkverbindung mit dem Türblatt steht und wobei das Antriebssystem zur Drehung des Schwenkarms um die Drehsäule vorgesehen ist, um die Bewegung des Türblatts von der Geschlossenstellung in die Freigabestellung und umgekehrt zu veranlassen.

### STAND DER TECHNIK

Aus dem Stand der Technik sind Schwenkschiebetürsysteme für Fahrzeuge, insbesondere Schienenfahrzeuge, bekannt, bei denen jeweils ein Türblatt zwischen einer Geschlossenstellung und einer Freigabestellung mittels eines eine Drehsäule umfassenden Schwenkmechanismus hin und her bewegbar sind. Dabei kann das Türblatt auch als Türflügel bezeichnet werden und ist der bewegliche Teil einer Tür.

Das jeweilige Türblatt ist in der Freigabestellung parallel zu einer Schieberichtung verschiebbar. Das Hin- und Herbewegen zwischen der Geschlossenstellung und der Freigabestellung wird auch als Ausstellbewegung bezeichnet und erfolgt quer zur Schieberichtung.

Ein Nachteil der oben genannten Lösung gemäß dem Stand der Technik ist darin zu sehen, dass bei Druckstößen auf das Türblatt die entsprechende Kraft direkt in die Drehsäule eingeleitet wird. Solche Druckstöße können z.B. von plötzlichen Luftdruckunterschieden zwischen dem Innenraum und dem Außenbereich eines Wagenkastens herrühren, welche beispielsweise bei Ein-/Ausfahrten in/aus Tunneln auftreten können, oder von nach außen oder innen gerichteten Gewalteinwirkungen durch Personen gegen das jeweilige Türblatt. Um mechanische Beschädigungen der Drehsäule zu vermeiden, muss diese entsprechend stark dimensioniert werden, was mit einem hohen Material- und Platzverbrauch einhergeht.

Aus der EP 0312450 A1 ist eine Schwenkschiebetür mit einem festen Rahmen für Züge bekannt, welche einen Türflügel aufweist, der sich in einer Verschlussstellung in einer Schließungsebene erstreckt und mittels eines Schwenkmechanismus in eine Öffnungsstellung bewegt werden kann. Um den Türflügel in der Verschlussstellung gegen Querkräfte zu sichern, sind Ineinandergreifmittel vorgesehen. Der Schwenkmechanismus umfasst eine Welle, welche drehbare Elemente miteinander koppelt. Um die Welle herum ist ein Rohr drehbar angeordnet, mit dem Lenker starr verbunden sind, die wiederum gelenkig mit Schlitten verbunden sind, um eine Wirkverbindung zum Türflügel herzustellen.

Aus der DE 202016101709 U1 ist eine Schwenkschiebetür mit einer Drehsäule bekannt, an der ein Schwenkhebel direkt befestigt ist. An einer unteren Kante der Schwenkschiebetür ist eine Dichtung vorgesehen, die mit einer Klappeinrichtung eingeklappt werden kann, wobei die Klappeinrichtung über die Drehbewegung der Drehsäule gesteuert wird.

### AUFGABE DER ERFINDUNG

Es ist daher Aufgabe der vorliegenden Erfindung, ein Schwenkschiebetürsystem zur Verfügung zu stellen, das die oben geschilderten Nachteile vermeidet. Insbesondere soll das Schwenkschiebetürsystem Druckstöße aufnehmen können, bei gleichzeitiger material- und platzsparender Dimensionierung der Drehsäule.

### DARSTELLUNG DER ERFINDUNG

Zur Lösung der geschilderten Aufgabe ist es bei einem Schwenkschiebetürsystem für ein Fahrzeug, insbesondere Schienenfahrzeug, umfassend ein sich in einer Ebene erstreckendes Türblatt, welches von einer Geschlossenstellung in eine Freigabestellung und umgekehrt mittels eines Schwenkmechanismus bewegbar ist, wobei die Geschlossenstellung und die Freigabestellung voneinander in einer ersten Richtung, die normal auf die Ebene des Türblatts steht und von der Geschlossenstellung zur Freigabestellung weist, beabstandet sind, wobei das Türblatt in der Freigabestellung parallel zu einer normal auf die erste Richtung stehenden zweiten Richtung verschiebbar ist und wobei der Schwenkmechanismus eine Drehsäule umfasst, die entlang einer normal auf die erste Richtung und auf die zweite Richtung stehenden dritten Richtung verläuft und um eine erste Drehachse drehbar ist, die parallel zur dritten Richtung ist, wobei der Schwenkmechanismus weiters einen Schwenkarm und ein Antriebssystem für den Schwenkarm umfasst, wobei der Schwenkarm an der Drehsäule um diese drehbar gelagert ist und über einen Endbereich in Wirkverbindung mit dem Türblatt steht und wobei das Antriebssystem zur Drehung des Schwenkarms um die Drehsäule vorgesehen ist, um die Bewegung des Türblatts von der Geschlossenstellung in die Freigabestellung und umgekehrt zu veranlassen, erfindungsgemäß vorgesehen, dass der Schwenkarm eine Führungskulisse aufweist und das Antriebssystem einen in der Führungskulisse geführten Verriegelungsbolzen, um Antriebsbewegungen vom Antriebssystem auf den Schwenkarm und Druckstöße vom Türblatt auf das Antriebssystem übertragen zu können.

Selbstverständlich kann das Schwenkschiebetürsystem auch mehrere, insbesondere zwei, Türblätter umfassen, bzw. kann das Schwenkschiebetürsystem außer dem Türblatt noch ein oder mehrere weitere Türblätter aufweisen.

Die Ebene des Türblatts wird von der zweiten und dritten Richtung aufgespannt.

Gemäß dem oben Gesagten weisen die Positionen des Türblatts in der Geschlossenstellung und der Freigabestellung einen Abstand zueinander auf, der in der ersten Richtung gemessen ist.

Das genannte Verschieben des Türblatts parallel zur zweiten Richtung ist als Hin- und Herschieben zu verstehen und umfasst folglich auch das - im mathematischen Sinne - Verschieben antiparallel zur zweiten Richtung. Die zweite Richtung könnte auch als Schieberichtung oder Längsrichtung bezeichnet werden und die erste Richtung als Querrichtung.

Indem der Schwenkarm an der Drehsäule um diese drehbar gelagert ist, kann der Schwenkarm nicht direkt von der Drehsäule gedreht werden. Stattdessen bewirkt das Antriebssystem die Drehung des Schwenkarms eine Drehung um die Drehsäule, um die Bewegung des Türblatts von der Geschlossenstellung in die Freigabestellung und umgekehrt zu bewirken bzw. zu bewerkstelligen. Aufgrund dieser Entkoppelung von Schwenkarm und Drehsäule werden Druckstöße auf das Türblatt bzw. Reaktionskräfte zwar vom Türblatt - aufgrund der Wirkverbindung zwischen Türblatt und Schwenkarm - direkt auf den Schwenkarm übertragen, jedoch nicht direkt vom Schwenkarm auf die Drehsäule. Stattdessen wirken die Reaktionskräfte direkt auf das Antriebssystem, welches bequem so stabil wie nötig gestaltet werden kann. Ein resultierendes Reaktionsmoment auf die Drehsäule kann somit vergleichsweise klein gehalten oder gar vermieden werden. Die mechanische Beanspruchung der Drehsäule bei Druckstößen auf das Türblatt ist entsprechend im Vergleich zu aus dem Stand der Technik bekannten Lösungen, insbesondere zum eingangs beschriebenen Stand der Technik, drastisch reduziert. Folglich kann die Drehsäule sehr schlank ausgeführt werden, ohne das Risiko einer Beschädigung bei Druckstößen auf das Türblatt einzugehen, was Material und Platz sowie Kosten spart.

Die relevanten Druckstöße wirken in der Geschlossenstellung nach außen bzw. parallel oder zumindest mit einem Richtungsanteil parallel zur ersten Richtung und in der Freigabestellung nach innen bzw. antiparallel oder zumindest mit einem Richtungsanteil antiparallel zur ersten Richtung.

Wie gesagt, ist es bei dem erfindungsgemäßen Schwenkschiebetürsystem vorgesehen, dass der Schwenkarm eine Führungskulisse aufweist und das Antriebssystem einen in der Führungskulisse geführten Verriegelungsbolzen, um Antriebsbewegungen vom Antriebssystem auf den Schwenkarm und Druckstöße vom Türblatt auf das Antriebssystem übertragen zu können. Die Kinematik des Schwenkarms lässt sich folglich äußerst bequem durch entsprechende Auslegung der Führungskulisse wunschgemäß einstellen, wobei zur Bewegung des Schwenkarms der Verriegelungsbolzen bewegt wird und die Bewegung des Verriegelungsbolzens aufgrund der Führungskulisse die gewünschte Bewegung des Schwenkarms zur Folge hat.

Der Verriegelungsbolzen kann dabei an der Führungskulisse abgleiten, wobei auch ein Abrollen denkbar wäre, wenn der Verriegelungsbolzen, insbesondere um seine Längsachse, drehbar gelagert wäre. Klarerweise ist ein gewisses Spiel des Verriegelungsbolzens in der Führungskulisse unabdingbar, andernfalls die Bewegung des Verriegelungsbolzens in der Führungskulisse blockiert wäre. In dritter Richtung gesehen liegt daher bei der geführten Bewegung des Verriegelungsbolzens in der Führungskulisse ein Kontaktpunkt zwischen Verriegelungsbolzen und Führungskulisse vor, wobei aufgrund der räumlichen Ausdehnung eine sich in der dritten Richtung erstreckende Kontaktlinie vorhanden ist.

Um den Verriegelungsbolzen auf einfache Art und Weise sowie mechanisch stabil und präzise bewegen zu können, ist es bei einer besonders bevorzugten Ausführungsform des erfindungsgemäßen Schwenkschiebetürsystems vorgesehen, dass das Antriebssystem ein Verriegelungsscheibenstück umfasst, an dem der Verriegelungsbolzen entlang der dritten Richtung abstehend befestigt ist, wobei das Verriegelungsscheibenstück um eine parallel zur ersten Drehachse verlaufende zweite Drehachse drehbar gelagert ist und in Eingriff mit einem Drehscheibenstück steht, wobei das Drehscheibenstück drehfest mit der Drehsäule verbunden ist.

Wie der Term "Stück" bereits impliziert müssen das Verriegelungsscheibenstück und/oder das Drehscheibenstück keine vollständige Scheiben- bzw. Zylinderform aufweisen und müssen insbesondere nicht drehsymmetrisch ausgebildet sein, wenngleich solche Ausbildungen natürlich auch nicht ausgeschlossen sind.

Bei Drehung der Drehsäule wird das Drehscheibenstück entsprechend mitgedreht und dreht - aufgrund des Eingriffs des Verriegelungsscheibenstücks mit dem Drehscheibenstück - wiederum das Verriegelungsscheibenstück. Mit der Drehung des Verriegelungsscheibenstücks geht die Bewegung des Verriegelungsbolzens entlang eines Kreisbogens einher, wodurch der Schwenkarm gemäß dem Verlauf der Führungskulisse bewegt wird. Da der Schwenkarm mit seinem Endbereich in Wirkverbindung mit dem Türblatt steht, bewegt der Schenkarm bei seiner Bewegung das Türblatt von der Geschlossenstellung in die Freigabestellung und umgekehrt.

Der Eingriff des Verriegelungsscheibenstücks mit dem Drehscheibenstück kann auf beliebige Art und Weise verwirklichst sein, beispielsweise durch einen Reibschluss. Um eine besonders präzise und sichere Bewegungsübertragung zwischen dem Verriegelungsscheibenstück und dem Drehscheibenstück zu garantieren, ist es bei einer besonders bevorzugten Ausführungsform des erfindungsgemäßen Schwenkschiebetürsystems vorgesehen, dass das Drehscheibenstück und das Verriegelungsscheibenstück verzahnte Abschnitte aufweisen, die miteinander in Eingriff stehen.

Bei einer besonders bevorzugten Ausführungsform des erfindungsgemäßen Schwenkschiebetürsystems ist vorgesehen, dass in erster Richtung gesehen der Verriegelungsbolzen in der Geschlossenstellung vor oder hinter der zweiten Drehachse angeordnet ist. Die besagte Anordnung vor oder hinter der zweiten Drehachse hängt von der konkreten Ausgestaltung der Führungskulisse sowie von der konkreten Drehrichtung des Verriegelungsscheibenstücks - und damit letztlich von der Drehrichtung des Drehscheibenstücks bzw. der Drehsäule - ab. Durch diese Anordnung wird die Einleitung der bei - nach außen gerichteten, d.h. parallel zur ersten Richtung weisenden oder mit einem Richtungsanteil parallel zur ersten Richtung versehenen - Druckstößen auf das Türblatt resultierenden Reaktionskräfte in die zweite Drehachse bzw. in das Verriegelungsscheibenstück im Bereich der zweiten Drehachse begünstigt, wobei die Reaktionskräfte - in Abhängigkeit von der oben genannten konkreten Anordnung - parallel zur ersten Richtung sein oder mit der ersten Richtung nur einen kleinen Winkel einschließen können. Entsprechend kann ein Reaktionsmoment auf die erste Drehachse bzw. auf das Drehscheibenstück und damit auf die Drehsäule minimal gehalten oder gänzlich vermieden werden.

Um besagte Reaktionskräfte möglichst klein zu halten, kann in der Geschlossenstellung die Anordnung des Verriegelungsbolzens so vorgesehen sein, dass in erster Richtung gesehen die Längsachse des Verriegelungsbolzens möglichst nahe zur zweiten Drehachse angeordnet ist, gleichwohl der Verriegelungsbolzen und die zweite Drehachse in der ersten Richtung selbst voneinander beabstandet sind. Entsprechend ist es bei einer besonders bevorzugten Ausführungsform des erfindungsgemäßen Schwenkschiebetürsystems vorgesehen, dass in erster Richtung gesehen der Verriegelungsbolzen in der Geschlossenstellung mit der zweiten Drehachse überlappt. D.h. in erster Richtung gesehen liegt die zweite Drehachse abschnittsweise innerhalb des Umrisses des Verriegelungsbolzens. Dies ermöglicht es, die gesamte Reaktionskraft oder fast die gesamte Reaktionskraft auf das Antriebssystem bzw. auf das Verriegelungsscheibenstück im Bereich der zweiten Drehachse zu übertragen und das Reaktionsmoment auf die erste Drehachse bzw. auf das Drehscheibenstück (und damit auf die Drehsäule) minimal zu halten oder gänzlich zu vermeiden.

Um die Reaktionskräfte bei nach außen wirkenden Druckstößen auf das Türblatt in der Geschlossenstellung vollständig in die zweite Drehachse einzuleiten und so ein Reaktionsmoment auf die erste Drehachse bzw. auf das Drehscheibenstück (und damit auf die Drehsäule) vollständig zu vermeiden, ist es bei einer besonders bevorzugten Ausführungsform des erfindungsgemäßen Schwenkschiebetürsystems vorgesehen, dass in erster Richtung gesehen der Verriegelungsbolzen in der Geschlossenstellung vor der zweiten Drehachse angeordnet ist und eine Längsachse des Verriegelungsbolzens in der Geschlossenstellung mit der zweiten Drehachse überlappt. D.h. die Längsachse des Verriegelungsbolzens und die zweite Drehachse liegen in erster Richtung gesehen übereinander. Gleichwohl sind die Längsachse des Verriegelungsbolzens und die zweite Drehachse in erster Richtung voneinander beabstandet.

Grundsätzlich wäre eine solche überlappende Anordnung der Längsachse des Verriegelungsbolzens und der zweiten Drehachse auch denkbar, wenn der Verriegelungsbolzen in der Geschlossenstellung des Türblatts (in erster Richtung gesehen) hinter der zweiten Drehachse angeordnet ist, was, wie bereits erwähnt, von der konkreten Ausgestaltung der Führungskulisse sowie von der konkreten Drehrichtung des Verriegelungsscheibenstücks abhängt. Die Anordnung des Verriegelungsbolzens (in erster Richtung gesehen) vor der zweiten Drehachse kann sich insofern als vorteilhaft erweisen, als diese Anordnung auf der vom Türblatt abgewandten Seite der zweiten Drehachse ist, was im Hinblick auf den in der Geschlossenstellung des Türblatts verfügbaren Platz vergleichsweise unproblematischer ist.

Mittels der Form bzw. Geometrie der Führungskulisse kann darauf Einfluss genommen werden, wie groß die aufzuwendende Kraft für das Entriegeln bzw. Überführen von der Geschlossenstellung in die Freigabestellung ist bzw. kann überhaupt die Möglichkeit des besagten Überführens sichergestellt werden. Entsprechend ist es bei einer besonders bevorzugten Ausführungsform des erfindungsgemäßen Schwenkschiebetürsystems vorgesehen, dass in dritter Richtung gesehen in der Geschlossenstellung eine Tangente an die Kontur der Führungskulisse in einem Kontaktpunkt mit dem Verriegelungsbolzen unter einem Winkel zur zweiten Richtung verläuft. D.h. besagte Tangente verläuft nicht parallel zur zweiten Richtung - der Winkel ist klarerweise größer null -, sodass sichergestellt ist, dass ein problemloses Entriegeln bzw. Überführen von der Geschlossenstellung in die Freigabestellung möglich ist.

Durch entsprechende Auslegung, insbesondere durch geeignete Wahl des Winkels, kann die aufzuwendende Kraft hinreichend beschränkt werden bzw. kann ggf. sichergestellt werden, dass diese Kraft nicht zu groß ist.

Der in dritter Richtung gesehene Kontaktpunkt bzw. die sich in dritter Richtung erstreckende Kontaktlinie ergibt sich dort, wo der Verriegelungsbolzen und die Führungskulisse einander kontaktieren, wenn das Entriegeln bzw. Überführen von der Geschlossenstellung in die Freigabestellung vorgenommen wird. Dies ist üblicherweise auf der Kontur der Führungskulisse gegenüberliegend zu jenem Kontaktpunkt bzw. jener Kontaktlinie, der bzw. die sich (ohne Druckstöße oder sonstige nach außen gerichtete Krafteinwirkung auf das Türblatt) einstellt, wenn das Türblatt aus der Freigabestellung in die Geschlossenstellung gebracht worden ist. Das oben Gesagte gilt jedenfalls, also für beide Kontaktpunkt-/Kontaktlinien-Positionen.

Alternativ oder zusätzlich ist es zur Sicherstellung der Möglichkeit des problemlosen Entriegelns bzw. Überführens von der Geschlossenstellung in die Freigabestellung bei einer besonders bevorzugten Ausführungsform des erfindungsgemäßen Schwenkschiebetürsystems, bei der die Längsachse des Verriegelungsbolzens und die zweite Drehachse in der Geschlossenstellung nicht überlappen, vorgesehen, dass in erster Richtung gesehen der Verriegelungsbolzen in der Geschlossenstellung vor der zweiten Drehachse angeordnet ist und in dritter Richtung gesehen ein erster Winkel zwischen der ersten Richtung und einer gedachten Verbindungslinie zwischen einer Längsachse des Verrieglungsbolzens und der zweiten Drehachse zwischen 0,1° und 5° beträgt.

Der genannte Winkelbereich stellt einerseits zuverlässig die Möglichkeit des Entriegelns bzw. Überführens von der Geschlossenstellung in die Freigabestellung sicher. Andererseits kann durch Wahl des ersten Winkels der Kraftaufwand beeinflusst werden, wobei größere Winkelwerte mit einem geringeren Kraftaufwand einhergehen. Gleichzeitig wird sichergestellt, dass die aufzuwendende Kraft auch nicht zu gering wird, um einem versehentlichen Entriegeln bzw. Überführen von der Geschlossenstellung in die Freigabestellung vorzubeugen.

Auch hier gilt, dass grundsätzlich eine analoge Ausführung denkbar wäre, bei der die Anordnung des Verriegelungsbolzens hinter der zweiten Drehachse ist, was, wie bereits erwähnt, von der konkreten Ausgestaltung der Führungskulisse sowie von der konkreten Drehrichtung des Verriegelungsscheibenstücks abhängt.

Die Form bzw. Geometrie der Führungskulisse kann grundsätzlich unterschiedlich ausgeführt sein, um die oben geschilderte Funktionalität zu gewährleisten. Um eine einfache Geometrie der Führungskulisse und damit eine einfache Fertigung sicherzustellen, ist es bei einer besonders bevorzugten Ausführungsform des erfindungsgemäßen Schwenkschiebetürsystems vorgesehen, dass in der Geschlossenstellung der Verriegelungsbolzen zumindest abschnittsweise in einem ersten Endbereich der Führungskulisse angeordnet ist und der erste Endbereich in erster Richtung gesehen vor der zweiten Drehachse angeordnet ist und mit dieser überlappt und dass in der Freigabestellung der Verriegelungsbolzen zumindest Abschnittsweise in einem zweiten Endbereich der Führungskulisse angeordnet ist und in erster Richtung gesehen der zweite Endbereich zwischen der ersten Drehachse und der zweiten Drehachse angeordnet ist und der erste Endbereich hinter der zweiten Drehachse angeordnet ist und mit dieser überlappt, wobei sich der erste Endbereich der Führungskulisse von einem ersten Ende eines Verlaufs der Führungskulisse weg erstreckt und sich der zweite Endbereich der Führungskulisse von einem zweiten Ende des Verlaufs der Führungskulisse weg erstreckt und die beiden Endbereiche der Führungskulisse jeweils zumindest 5%, bevorzugt zumindest 10%, besonders bevorzugt zumindest 20%, des Verlaufs der Führungskulisse umfassen.

Alternativ oder zusätzlich ist es, um eine einfache Geometrie der Führungskulisse und damit eine einfache Fertigung sicherzustellen, bei einer besonders bevorzugten Ausführungsform des erfindungsgemäßen Schwenkschiebetürsystems vorgesehen, dass in der Freigabestellung ein Verlauf der Führungskulisse relativ zur zweiten Drehachse zumindest abschnittsweise eine konkave Krümmung aufweist, wobei der Verlauf vorzugsweise nur konkav gekrümmt ist.

Allgemeiner kann zur Sicherstellung einer einfachen Geometrie der die gewünschte Funktionalität aufweisenden Führungskulisse und damit einer einfachen Fertigung vorgesehen sein, dass die Führungskulisse einen Verlauf hat, der zumindest abschnittsweise gekrümmt ist und/oder zumindest einen Knick aufweist.

Bei einer besonders bevorzugten Ausführungsform des erfindungsgemäßen Schwenkschiebetürsystems ist vorgesehen, dass in dritter Richtung gesehen in der Freigabestellung ein zweiter Winkel zwischen einer Normalen an die Kontur der Führungskulisse in einem Kontaktpunkt mit dem Verriegelungsbolzen und einer gedachten Verbindungslinie zwischen dem Kontaktpunkt und der zweiten Drehachse >0° ist, vorzugsweise >30° ist. Dies verhindert eine Blockade in der Freigabestellung, wodurch ein, insbesondere manuelles, Zuziehen des Türblatts bzw. ein Überführen von der Freigabestellung in die Geschlossenstellung prinzipiell ermöglicht wird.

Der in dritter Richtung gesehene Kontaktpunkt bzw. die sich in dritter Richtung erstreckende Kontaktlinie ergibt sich dort, wo der Verriegelungsbolzen und die Führungskulisse einander kontaktieren, wenn das Zuziehen vorgenommen wird, d.h. wenn das Türblatt nach innen bzw. gegen die erste Richtung gezogen/bewegt wird. Dies ist üblicherweise auf der Kontur der Führungskulisse gegenüberliegend zu jenem Kontaktpunkt bzw. jener Kontaktlinie, die sich (ohne Druckstöße oder sonstige nach innen gerichtete Krafteinwirkung auf das Türblatt) einstellt, wenn das Türblatt aus der Geschlossenstellung in die Freigabestellung gebracht worden ist. Das oben Gesagte gilt jedenfalls, also für beide Kontaktpunkt-/Kontaktlinien-Positionen.

Um die Wirkverbindung des Endbereichs des Schwenkarms mit dem Türblatt auf einfache, stabile und kostengünstige Weise verwirklichen zu können, ist es bei einer bevorzugten Ausführungsform des erfindungsgemäßen Schwenkschiebetürsystems vorgesehen, dass im Endbereich des Schwenkarms eine Führungsrolle angeordnet ist, die um eine dritte Drehachse drehbar ist, wobei die dritte Drehachse parallel zur dritten Richtung ist, wobei die Führungsrolle in Eingriff mit einer parallel zur zweiten Richtung verlaufenden und mit dem Türblatt fest verbundenen Längsführung ist. Die Längsführung kann dabei in das Türblatt integriert sein, insbesondere so, dass die Längsführung nicht von einer Innenseite des Türblatts gegen die erste Richtung absteht.

Analog zum oben Gesagten ist erfindungsgemäß ein System vorgesehen, das System umfassend einen Wagenkasten sowie mindestens ein erfindungsgemäßes Schwenkschiebetürsystem, wobei sich das Antriebssystem, insbesondere ein Verriegelungsscheibenstück des Antriebssystems, am Wagenkasten, vorzugsweise über eine Konsole, abstützt. Diese Abstützung eignet sich besonders gut, um auf das Türblatt wirkende Druckstöße aufnehmen zu können. Beim Wagenkasten können ein oder mehrere erfindungsgemäße Schwenkschiebetürsysteme vorgesehen sein.

### KURZE BESCHREIBUNG DER FIGUREN

Die Erfindung wird nun anhand eines Ausführungsbeispiels näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine Aufsicht auf ein erfindungsgemäßes Schwenkschiebetürsystem an einem Wagenkasten mit Blickrichtung von innen nach außen
- Fig. 2: eine axonometrische Detailansicht eines Schwenkmechanismus für ein Türblatt, wobei sich das Türblatt in einer Geschlossenstellung befindet
- Fig. 3: eine axonometrische Detailansicht analog zu Fig. 2, wobei sich das Türblatt in einer Zwischenstellung, zwischen der Geschlossenstellung und einer Freigabestellung befindet
- Fig. 4: eine axonometrische Detailansicht analog zu Fig. 2, wobei sich das Türblatt in der Freigabestellung befindet
- Fig. 5: eine Seitenansicht zur Darstellung in Fig. 2
- Fig. 6: eine Seitenansicht zur Darstellung in Fig. 4
- Fig. 7: eine schematische Aufsicht auf den Schwenkmechanismus, wobei sich das Türblatt in der Geschlossenstellung befindet
- Fig. 8: eine Detailansicht einer Kontur und eines Verlaufs einer Führungskulisse des Schwenkmechanismus
- Fig. 9: eine Darstellung analog zu Fig. 7, wobei sich das Türblatt in einer Zwischenstellung befindet
- Fig. 10: eine Darstellung analog zu Fig. 7, wobei sich das Türblatt in der Freigabestellung befindet

### WEGE ZUR AUSFÜHRUNG DER ERFINDUNG

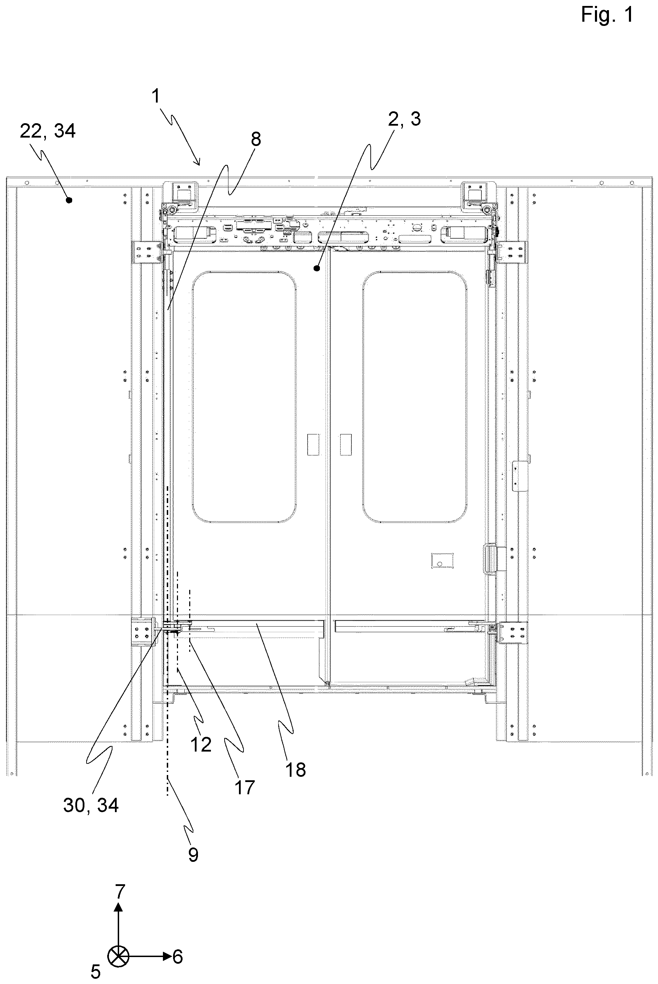

Fig. 1 zeigt ein erfindungsgemäßes Schwenkschiebetürsystem 1 an einem Wagenkasten 34, wie ihn z.B. Schienenfahrzeuge aufweisen können, wobei die Blickrichtung auf eine Innenseite einer durch den Wagenkasten 34 ausgebildeten Fahrzeugwand 22 weist. Das erfindungsgemäße Schwenkschiebetürsystem 1 und der Wagenkasten 34 bilden ein erfindungsgemäßes System oder zumindest einen Teil von einem solchen System.

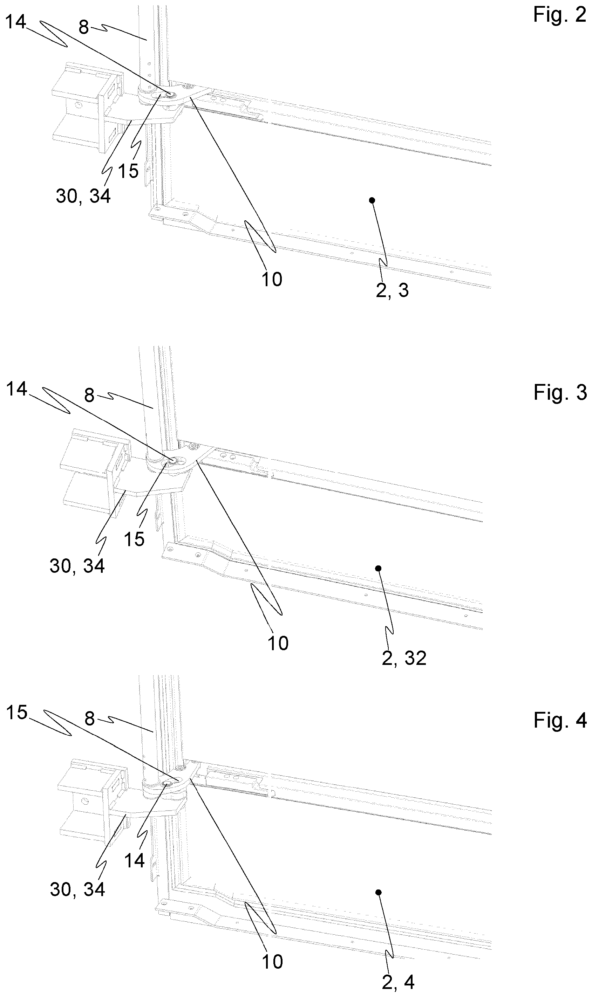

Das Schwenkschiebetürsystem 1 umfasst ein sich in einer Ebene, die in Fig. 1 mit der Zeichenebene zusammenfällt, erstreckendes Türblatt 2. Das Türblatt 2 kann mittels eines Schwenkmechanismus von einer in Fig. 1 dargestellten Geschlossenstellung 3 in eine Freigabestellung 4 - vgl. Fig. 4, Fig. 6 und Fig. 10 - und umgekehrt bewegt werden. Die Geschlossenstellung 3 und die Freigabestellung 4 sind voneinander in einer ersten Richtung 5, die normal auf die Ebene des Türblatts 2 steht und von der Geschlossenstellung 3 zur Freigabestellung 4 weist, beabstandet, wobei das Türblatt 2 in der Freigabestellung 4 parallel zu einer normal auf die erste Richtung 5 stehenden zweiten Richtung 6 verschiebbar ist, um eine Türöffnung in erster Richtung 5 freizugeben, sodass Personen durch die Türöffnung in den Wagenkasten 34 eintreten sowie aus dem Wagenkasten 34 austreten können.

Der Schwenkmechanismus umfasst eine Drehsäule 8, die entlang einer normal auf die erste Richtung 5 und auf die zweite Richtung 6 stehenden dritten Richtung 7 verläuft und um eine erste Drehachse 9 drehbar ist, die parallel zur dritten Richtung 7 ist.

Der Schwenkmechanismus umfasst weiters einen Schwenkarm 10 und ein Antriebssystem 25 für den Schwenkarm 10, wobei sich das Antriebssystem 25 im dargestellten Ausführungsbeispiel an einer Konsole 30 des Wagenkastens 34 bzw. über die Konsole 30 am Wagenkasten 34 abstützt. Der Schwenkarm 10 ist an der Drehsäule 8 um diese drehbar gelagert und steht über einen Endbereich 29 in Wirkverbindung mit dem Türblatt 2. Das Antriebssystem 25 ist zur Drehung des Schwenkarms 10 um die Drehsäule 8 vorgesehen, um die Bewegung des Türblatts 2 von der Geschlossenstellung 3 in die Freigabestellung 4 und umgekehrt zu veranlassen bzw. zu bewerkstelligen.

Im dargestellten Ausführungsbeispiel weist der Schwenkarm 10 eine Führungskulisse 15 auf und das Antriebssystem 25 einen in der Führungskulisse 15 geführten Verriegelungsbolzen 14, um Antriebsbewegungen vom Antriebssystem 25 auf den Schwenkarm 10 und Druckstöße, die mit einer wirkenden Kraft 23 einhergehen, vom Türblatt 2 auf das Antriebssystem 25 übertragen zu können. Der Verriegelungsbolzen 14 ist dabei notwendigerweise mit einem gewissen geringen Spiel in der Führungskulisse 15 geführt, andernfalls eine Bewegung des Verriegelungsbolzens 14 in der Führungskulisse 15 blockiert wäre.

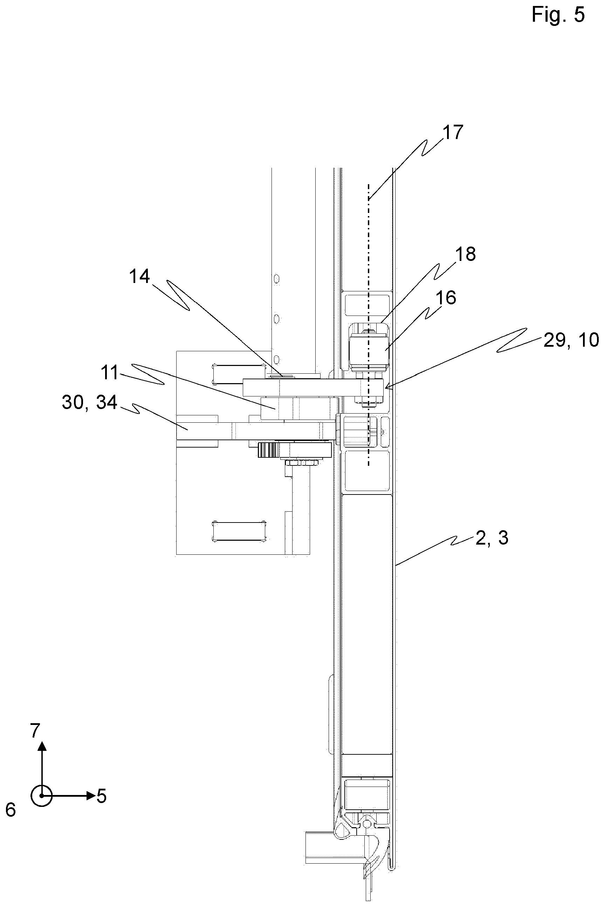

Der Schwenkarm 10 mit der Führungskulisse 15 sowie der Verriegelungsbolzen 14 sind beispielsweise in Fig. 2, Fig. 3 und Fig. 4 erkennbar, wobei sich das Türblatt 2 in Fig. 2 in der Geschlossenstellung 3 befindet, in Fig. 5 in der Freigabestellung 4 und in Fig. 4 in einer - von mathematisch gesehen unendlich vielen - Zwischenstellung 32, die vom Türblatt 2 auf dem Weg zwischen der Geschlossenstellung 3 und der Freigabestellung 4 (und umgekehrt) eingenommen wird.

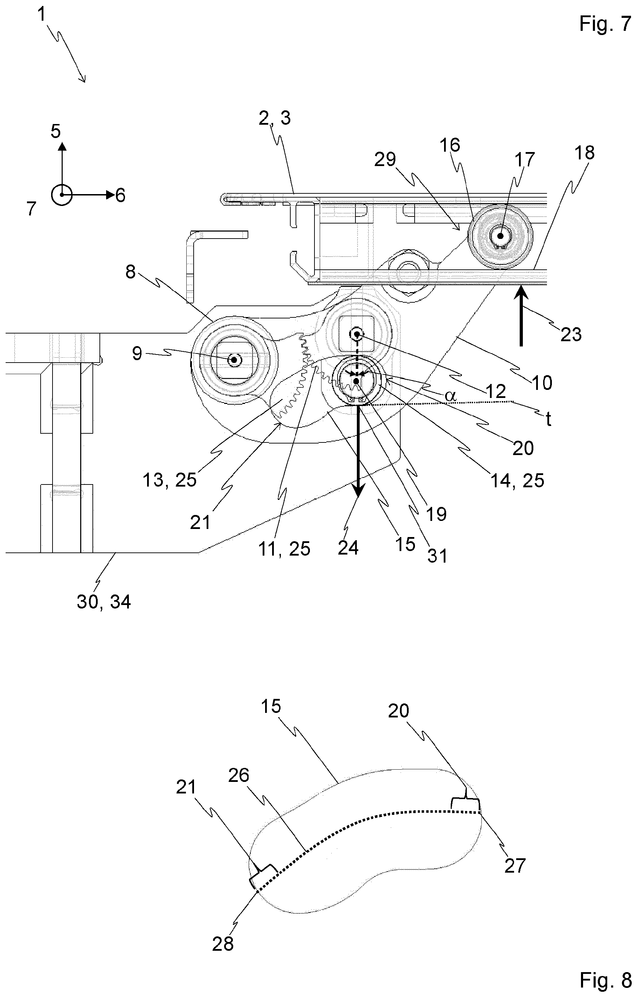

Im dargestellten Ausführungsbeispiel umfasst das Antriebssystem 25 weiters ein Verriegelungsscheibenstück 11, an dem der Verriegelungsbolzen 14 entlang der dritten Richtung 7 abstehend befestigt ist, wobei das Verriegelungsscheibenstück 11 um eine parallel zur ersten Drehachse 9 verlaufende zweite Drehachse 12 drehbar gelagert ist und in Eingriff mit einem Drehscheibenstück 13 steht, wobei das Drehscheibenstück 13 drehfest mit der Drehsäule 8 verbunden ist. Dabei stehen das Drehscheibenstück 13 und das Verriegelungsscheibenstück 11 im dargestellten Ausführungsbeispiel über verzahnte Abschnitte miteinander in Eingriff, wie in den schematischen Darstellungen von Fig. 7, Fig. 9 und Fig. 10 gut erkennbar ist.

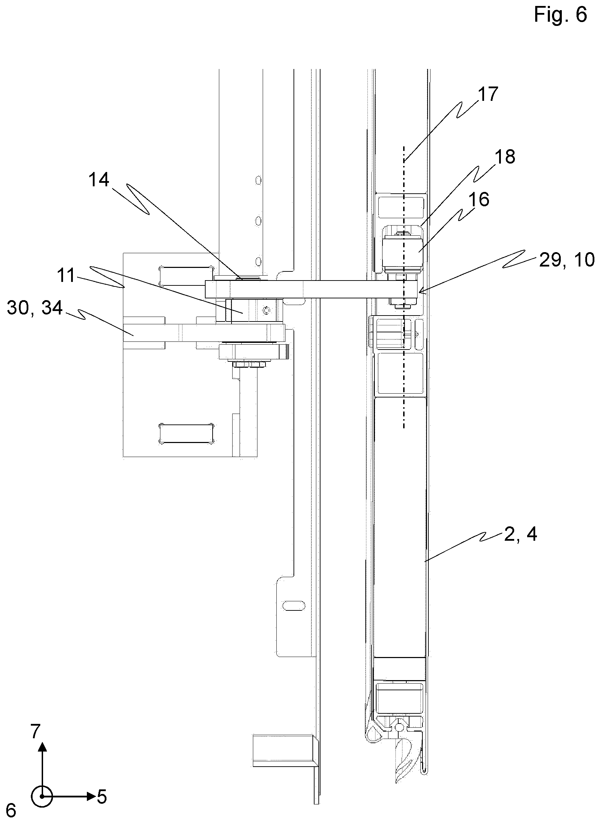

Die oben genannte Wirkverbindung zwischen dem Schwenkarm 10 und dem Türblatt 2 ist im dargestellten Ausführungsbeispiel so verwirklicht, dass im Endbereich 29 des Schwenkarms 10 eine Führungsrolle 16 angeordnet ist, die um eine dritte Drehachse 17 drehbar ist, wobei die dritte Drehachse 17 parallel zur dritten Richtung 7 ist, wobei die Führungsrolle 16 in Eingriff mit einer parallel zur zweiten Richtung 6 verlaufenden und mit dem Türblatt 2 fest verbundenen Längsführung 18 ist, vgl. insbesondere Fig. 5 und Fig. 6. Neben der Bewegung des Türblatts 2 aus der Geschlossenstellung 3 in die Freigabestellung 4 und umgekehrt ermöglicht die sich parallel zur zweiten Richtung 6 erstreckende Längsführung 18 im Zusammenspiel mit der Führungsrolle 16 auch das Hin- und Herschieben des in der Freigabestellung 4 befindlichen Türblatts 2 antiparallel und parallel zur zweiten Richtung 6.

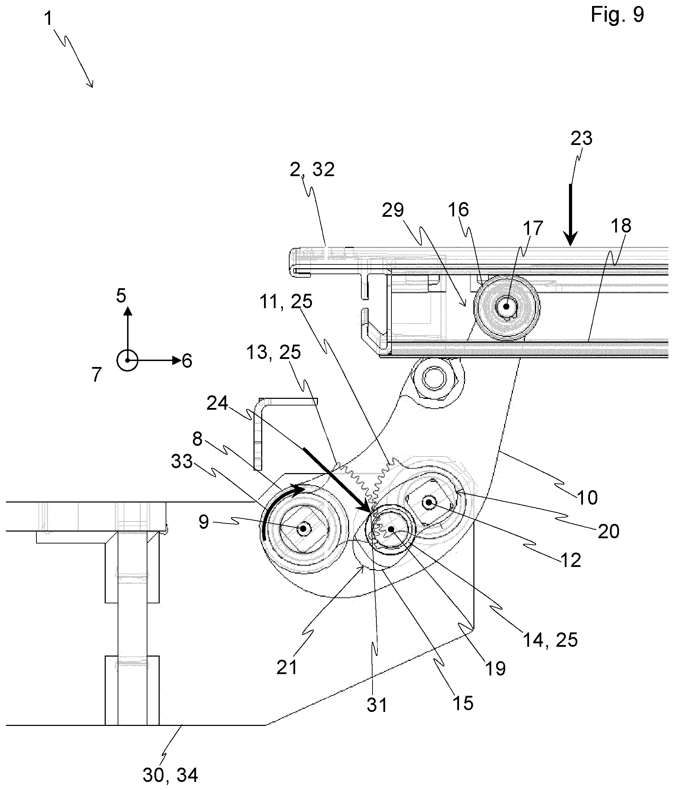

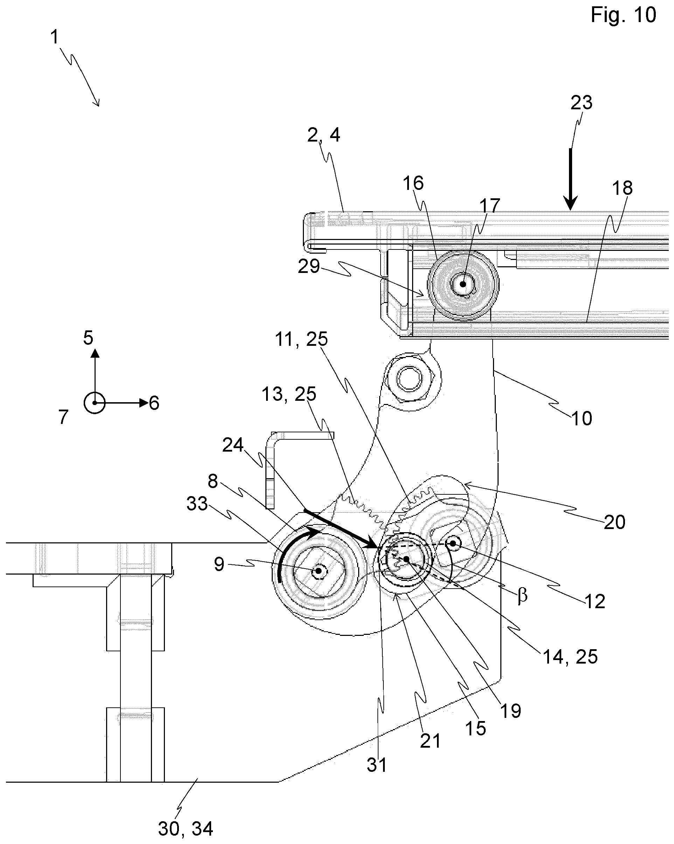

Um in der Geschlossenstellung 3 eine Reaktionskraft 24, die durch einen Druckstoß auf das Türblatt 2 mit der Kraft 23, die nach außen gerichtet bzw. parallel zur ersten Richtung 5 ist oder zumindest einen Richtungsanteil parallel zur ersten Richtung 5 aufweist, möglichst vollständig in die zweite Drehachse 12 bzw. in das Verriegelungsscheibenstück 11 im Bereich der zweiten Drehachse 12 einleiten zu können, ist es beim dargestellten Ausführungsbeispiel vorgesehen, dass in erster Richtung 5 gesehen der Verriegelungsbolzen 14 in der Geschlossenstellung 3 vor der zweiten Drehachse 12 angeordnet ist, wobei der Verriegelungsbolzen 14 in der Geschlossenstellung 3 mit der zweiten Drehachse 12 überlappt. Ein Reaktionsmoment 33 (vgl. Fig. 9 und Fig. 10) auf das Drehscheibenstück 13 und damit auf die Drehsäule 8 kann somit weitgehend ausgeschlossen werden und ist daher in Fig. 7 auch nicht vorhanden.

Um sicherzustellen, dass eine Entriegelung bzw. ein Überführen von der Geschlossenstellung 3 in die Freigabestellung 4 vorgenommen werden kann, ist im dargestellten Ausführungsbeispiel die Führungskulisse 15 entsprechend gestaltet. Konkret ist vorgesehen, dass in dritter Richtung 7 gesehen in der Geschlossenstellung 3 eine Tangente t an die Kontur der Führungskulisse 15 in einem Kontaktpunkt 31 mit dem Verriegelungsbolzen 14 unter einem Winkel zur zweiten Richtung 6 verläuft, vgl. Fig. 7. D.h. dieser Winkel ist größer null. Der in dritter Richtung 7 gesehene Kontaktpunkt 31 bzw. eine sich in dritter Richtung 7 erstreckende Kontaktlinie ergibt sich dort, wo der Verriegelungsbolzen 14 und die Führungskulisse 15 einander kontaktieren, wenn die Entriegelung vorgenommen wird. Dies ist auf der Kontur der Führungskulisse 15 gegenüberliegend zu jenem Kontaktpunkt bzw. jener Kontaktlinie, der bzw. die sich (ohne Druckstöße oder sonstige nach außen gerichtete Krafteinwirkung auf das Türblatt 2) einstellt, wenn das Türblatt 2 aus der Freigabestellung 4 in die Geschlossenstellung 3 gebracht worden ist. Das oben Gesagte gilt jedenfalls, also für beide Kontaktpunkt-/Kontaktlinien-Positionen.

Darüberhinaus ist beim dargestellten Ausführungsbeispiel die Führungskulisse 15 derart ausgelegt, dass in erster Richtung 5 gesehen der Verriegelungsbolzen 14 in der Geschlossenstellung 3 vor der zweiten Drehachse 12 angeordnet ist und in dritter Richtung 7 gesehen ein erster Winkel α zwischen der ersten Richtung 5 und einer gedachten Verbindungslinie zwischen einer Längsachse 19 des Verrieglungsbolzens 14 und der zweiten Drehachse 12 zwischen 0,1° und 5° beträgt, vgl. die strichlierten Linien in Fig. 7. Der genannte Winkelbereich stellt einerseits zuverlässig die Möglichkeit der Entriegelung sicher. Andererseits kann durch Wahl des ersten Winkels α der Kraftaufwand für das Entriegeln beeinflusst werden, wobei größere Winkelwerte mit einem geringeren Kraftaufwand einhergehen. Gleichzeitig wird sichergestellt, dass die aufzuwendende Kraft auch nicht zu gering wird, um einer versehentliche Entriegelung vorzubeugen.

Um eine einfache Geometrie der Führungskulisse und damit eine einfache Fertigung sicherzustellen, ist es beim gezeigten Ausführungsbeispiel vorgesehen, dass in der Geschlossenstellung 3 der Verriegelungsbolzen 14 zumindest abschnittsweise in einem ersten Endbereich 20 der Führungskulisse 15 angeordnet ist und der erste Endbereich 20 in erster Richtung 5 gesehen vor der zweiten Drehachse 12 angeordnet ist und mit dieser überlappt, vgl. Fig. 8 iVm Fig. 7. Weiters ist in der Freigabestellung 4 der Verriegelungsbolzen 14 zumindest Abschnittsweise in einem zweiten Endbereich 21 der Führungskulisse 15 angeordnet und ist in erster Richtung 5 gesehen der zweite Endbereich 21 zwischen der ersten Drehachse 9 und der zweiten Drehachse 12 angeordnet, wobei der erste Endbereich 20 hinter der zweiten Drehachse 12 angeordnet ist und mit dieser überlappt, vgl. Fig. 8 iVm Fig. 10. Dabei erstreckt sich der erste Endbereich 20 der Führungskulisse 15 von einem ersten Ende 27 eines Verlaufs 26 der Führungskulisse 15 weg und erstreckt sich der zweite Endbereich 21 der Führungskulisse 15 von einem zweiten Ende 28 des Verlaufs 26 der Führungskulisse 15 weg, wobei die beiden Endbereiche 20, 21 der Führungskulisse 15 jeweils zumindest 5%, bevorzugt zumindest 10%, besonders bevorzugt zumindest 20%, des Verlaufs 26 der Führungskulisse 15 umfassen, vgl. Fig. 8.

Wie aus Fig. 10 hervorgeht, weist der Verlauf 26 der Führungskulisse 15 in der Freigabestellung 4 relativ zur zweiten Drehachse 12 zumindest abschnittsweise eine konkave Krümmung auf.

Um schließlich in der Freigabestellung 4 eine Blockade zu verhindern und ein, insbesondere manuelles, Zuziehen des Türblatts 2 zu ermöglichen, ist beim dargestellten Ausführungsbeispiel vorgesehen, dass in dritter Richtung 7 gesehen in der Freigabestellung 4 ein zweiter Winkel β zwischen einer Normalen an die Kontur der Führungskulisse 15 im Kontaktpunkt 31 mit dem Verriegelungsbolzen 14 und einer gedachten Verbindungslinie zwischen dem Kontaktpunkt 31 und der zweiten Drehachse 12 >0° ist, vorzugsweise >30° ist, vgl. Fig. 10.

Der in dritter Richtung gesehene Kontaktpunkt bzw. die sich in dritter Richtung erstreckende Kontaktlinie ergibt sich dort, wo der Verriegelungsbolzen und die Führungskulisse einander kontaktieren, wenn das Zuziehen vorgenommen wird, d.h. wenn das Türblatt 2 nach innen bzw. gegen die erste Richtung 5 gezogen/bewegt wird. Dies ist üblicherweise auf der Kontur der Führungskulisse 15 gegenüberliegend zu jenem Kontaktpunkt bzw. jener Kontaktlinie, die sich (ohne Druckstöße oder sonstige nach innen gerichtete Krafteinwirkung auf das Türblatt 2) einstellt, wenn das Türblatt aus der Geschlossenstellung in die Freigabestellung gebracht worden ist. Das oben Gesagte gilt jedenfalls, also für beide Kontaktpunkt-/Kontaktlinien-Positionen.

Entsprechend hat eine nach innen gerichtete Kraft 23, die auf das Türblatt 2 einwirkt eine im Kontaktpunkt 31 wirkende Reaktionskraft 24 zur Folge, die wiederum ein nicht verschwindendes - wenngleich auch nicht besonders großes - Reaktionsmoment 33 auf das Drehscheibenstück 13 bzw. die Drehsäule 8 nach sich zieht. Dies ist sowohl in der Freigabestellung 4 der Fall, vgl. Fig. 10, als auch in der Zwischenstellung 32, vgl. Fig. 9.

### BEZUGSZEICHENLISTE

- 1: Schwenkschiebetürsystem
- 2: Türblatt
- 3: Geschlossenstellung
- 4: Freigabestellung
- 5: Erste Richtung
- 6: Zweite Richtung
- 7: Dritte Richtung
- 8: Drehsäule
- 9: Erste Drehachse
- 10: Schwenkarm
- 11: Verriegelungsscheibenstück
- 12: Zweite Drehachse
- 13: Drehscheibenstück
- 14: Verriegelungsbolzen
- 15: Führungskulisse
- 16: Führungsrolle
- 17: Dritte Drehachse
- 18: Längsführung
- 19: Längsachse des Verriegelungsbolzens
- 20: Erster Endbereich der Führungskulisse
- 21: Zweiter Endbereich der Führungskulisse
- 22: Fahrzeugwand
- 23: Kraft
- 24: Reaktionskraft
- 25: Antriebssystem
- 26: Verlauf der Führungskulisse
- 27: Erstes Ende des Verlaufs der Führungskulisse
- 28: Zweites Ende des Verlaufs der Führungskulisse
- 29: Endbereich des Schwenkarms
- 30: Konsole
- 31: Kontaktpunkt
- 32: Zwischenstellung
- 33: Reaktionsmoment
- 34: Wagenkasten
- α: Erster Winkel
- β: Zweiter Winkel
- t: Tangente

## Patentansprüche

1. Schwenkschiebetürsystem (1) für ein Fahrzeug, insbesondere Schienenfahrzeug, umfassend ein sich in einer Ebene erstreckendes Türblatt (2), welches von einer Geschlossenstellung (3) in eine Freigabestellung (4) und umgekehrt mittels eines Schwenkmechanismus bewegbar ist, wobei die Geschlossenstellung (3) und die Freigabestellung (4) voneinander in einer ersten Richtung (5), die normal auf die Ebene des Türblatts (2) steht und von der Geschlossenstellung (3) zur Freigabestellung (4) weist, beabstandet sind, wobei das Türblatt (2) in der Freigabestellung (4) parallel zu einer normal auf die erste Richtung (5) stehenden zweiten Richtung (6) verschiebbar ist und wobei der Schwenkmechanismus eine Drehsäule (8) umfasst, die entlang einer normal auf die erste Richtung (5) und auf die zweite Richtung (6) stehenden dritten Richtung (7) verläuft und um eine erste Drehachse (9) drehbar ist, die parallel zur dritten Richtung (7) ist, wobei der Schwenkmechanismus weiters einen Schwenkarm (10) und ein Antriebssystem (25) für den Schwenkarm (10) umfasst, wobei der Schwenkarm (10) an der Drehsäule (8) um diese drehbar gelagert ist und über einen Endbereich (29) in Wirkverbindung mit dem Türblatt (2) steht und wobei das Antriebssystem (25) zur Drehung des Schwenkarms (10) um die Drehsäule (8) vorgesehen ist, um die Bewegung des Türblatts (2) von der Geschlossenstellung (3) in die Freigabestellung (4) und umgekehrt zu veranlassen, **dadurch gekennzeichnet, dass** der Schwenkarm (10) eine Führungskulisse (15) aufweist und das Antriebssystem (25) einen in der Führungskulisse (15) geführten Verriegelungsbolzen (14), um Antriebsbewegungen vom Antriebssystem (25) auf den Schwenkarm (10) und Druckstöße (23) vom Türblatt (2) auf das Antriebssystem (25) übertragen zu können.

2. Schwenkschiebetürsystem (1) nach Anspruch 1, **dadurch gekennzeichnet, dass** das Antriebssystem (25) ein Verriegelungsscheibenstück (11) umfasst, an dem der Verriegelungsbolzen (14) entlang der dritten Richtung (7) abstehend befestigt ist, wobei das Verriegelungsscheibenstück (11) um eine parallel zur ersten Drehachse (9) verlaufende zweite Drehachse (12) drehbar gelagert ist und in Eingriff mit einem Drehscheibenstück (13) steht, wobei das Drehscheibenstück (13) drehfest mit der Drehsäule (8) verbunden ist.

3. Schwenkschiebetürsystem (1) nach Anspruch 2, **dadurch gekennzeichnet, dass** in erster Richtung (5) gesehen der Verriegelungsbolzen (14) in der Geschlossenstellung (3) vor oder hinter der zweiten Drehachse (12) angeordnet ist.

4. Schwenkschiebetürsystem (1) nach Anspruch 3, **dadurch gekennzeichnet, dass** in erster Richtung (5) gesehen der Verriegelungsbolzen (14) in der Geschlossenstellung (3) mit der zweiten Drehachse (12) überlappt.

5. Schwenkschiebetürsystem (1) nach Anspruch 4, **dadurch gekennzeichnet, dass** in erster Richtung (5) gesehen der Verriegelungsbolzen (14) in der Geschlossenstellung (3) vor der zweiten Drehachse (12) angeordnet ist und eine Längsachse (19) des Verriegelungsbolzens (14) in der Geschlossenstellung (3) mit der zweiten Drehachse (12) überlappt.

6. Schwenkschiebtürsystem (1) nach einem der Ansprüche 4 bis 5, **dadurch gekennzeichnet, dass** in dritter Richtung (7) gesehen in der Geschlossenstellung (3) eine Tangente (t) an die Kontur der Führungskulisse (15) in einem Kontaktpunkt (31) mit dem Verriegelungsbolzen (14) unter einem Winkel zur zweiten Richtung (6) verläuft.

7. Schwenkschiebetürsystem (1) nach Anspruch 4, **dadurch gekennzeichnet, dass** in erster Richtung (5) gesehen der Verriegelungsbolzen (14) in der Geschlossenstellung (3) vor der zweiten Drehachse (12) angeordnet ist und in dritter Richtung (7) gesehen ein erster Winkel (α) zwischen der ersten Richtung (5) und einer gedachten Verbindungslinie zwischen einer Längsachse (19) des Verrieglungsbolzens (14) und der zweiten Drehachse (12) zwischen 0,1° und 5° beträgt.

8. Schwenkschiebetürsystem (1) nach einem der Ansprüche 2 bis 7, **dadurch gekennzeichnet, dass** in der Geschlossenstellung (3) der Verriegelungsbolzen (14) zumindest abschnittsweise in einem ersten Endbereich (20) der Führungskulisse (15) angeordnet ist und der erste Endbereich (20) in erster Richtung (5) gesehen vor der zweiten Drehachse (12) angeordnet ist und mit dieser überlappt
und dass in der Freigabestellung (4) der Verriegelungsbolzen (14) zumindest Abschnittsweise in einem zweiten Endbereich (21) der Führungskulisse (15) angeordnet ist und in erster Richtung (5) gesehen der zweite Endbereich (21) zwischen der ersten Drehachse (9) und der zweiten Drehachse (12) angeordnet ist und der erste Endbereich (20) hinter der zweiten Drehachse (12) angeordnet ist und mit dieser überlappt,
wobei sich der erste Endbereich (20) der Führungskulisse (15) von einem ersten Ende (27) eines Verlaufs (26) der Führungskulisse (15) weg erstreckt und sich der zweite Endbereich (21) der Führungskulisse (15) von einem zweiten Ende (28) des Verlaufs (26) der Führungskulisse (15) weg erstreckt und die beiden Endbereiche (20, 21) der Führungskulisse (15) jeweils zumindest 5%, bevorzugt zumindest 10%, besonders bevorzugt zumindest 20%, des Verlaufs (26) der Führungskulisse (15) umfassen.

9. Schwenkschiebetürsystem (1) nach einem der Ansprüche 2 bis 8, **dadurch gekennzeichnet, dass** in der Freigabestellung (4) ein Verlauf (26) der Führungskulisse (15) relativ zur zweiten Drehachse (12) zumindest abschnittsweise eine konkave Krümmung aufweist, wobei der Verlauf (26) vorzugsweise nur konkav gekrümmt ist.

10. Schwenkschiebetürsystem (1) nach einem der Ansprüche 2 bis 9, **dadurch gekennzeichnet, dass** das Drehscheibenstück (13) und das Verriegelungsscheibenstück (11) verzahnte Abschnitte aufweisen, die miteinander in Eingriff stehen.

11. Schwenkschiebetürsystem (1) nach einem der Ansprüche 1 bis 10, **dadurch gekennzeichnet, dass** die Führungskulisse (15) einen Verlauf (26) hat, der zumindest abschnittsweise gekrümmt ist und/oder zumindest einen Knick aufweist.

12. Schwenkschiebtürsystem (2) nach einem der Ansprüche 1 bis 11, **dadurch gekennzeichnet, dass** in dritter Richtung (7) gesehen in der Freigabestellung (4) ein zweiter Winkel (β) zwischen einer Normalen an die Kontur der Führungskulisse (15) in einem Kontaktpunkt (31) mit dem Verriegelungsbolzen (14) und einer gedachten Verbindungslinie zwischen dem Kontaktpunkt (31) und der zweiten Drehachse (12) >0° ist, vorzugsweise >30° ist.

13. Schwenkschiebetürsystem (1) nach einem der Ansprüche 1 bis 12, **dadurch gekennzeichnet, dass** im Endbereich (29) des Schwenkarms (10) eine Führungsrolle (16) angeordnet ist, die um eine dritte Drehachse (17) drehbar ist, wobei die dritte Drehachse (17) parallel zur dritten Richtung (7) ist, wobei die Führungsrolle (16) in Eingriff mit einer parallel zur zweiten Richtung (6) verlaufenden und mit dem Türblatt (2) fest verbundenen Längsführung (18) ist.

14. System umfassend einen Wagenkasten (34) sowie mindestens ein Schwenkschiebetürsystem (1) nach einem der Ansprüche 1 bis 13, wobei sich das Antriebssystem (25), insbesondere ein Verriegelungsscheibenstück (11) des Antriebssystems (25), am Wagenkasten (34), vorzugsweise über eine Konsole (30), abstützt.

## Claims

1. A pivoting and sliding door system (1) for a vehicle, in particular a rail vehicle, comprising a door leaf (2), which extends in a plane and is movable from a closed position (3) into an open position (4), and vice versa, by means of a pivoting mechanism, the closed position (3) and the open position (4) being at a distance from one another in a first direction (5), which is normal to the plane of the door leaf (2) and points from the closed position (3) toward the open position (4), the door leaf (2) being movable in parallel with a second direction (6) normal to the first direction (5) in the open position (4) and the pivoting mechanism comprising a rotary column (8), which extends in a third direction (7) normal to the first direction (5) and the second direction (6) and is rotatable about a first axis of rotation (9), which is parallel to the third direction (7), the pivoting mechanism further comprising a pivot arm (10) and a drive system (25) for the pivot arm (10), the pivot arm (10) being mounted on the rotary column (8) to rotate about said column and being operatively connected to the door leaf (2) by an end region (29), and the drive system (25) being provided to rotate the pivot arm (10) about the rotary column (8) in order to cause the door leaf (2) to move from the closed position (3) into the open position (4), and vice versa, **characterized in that** the pivot arm (10) comprises a guide link (15) and the drive system (25) comprises a locking pin (14) guided in the guide link (15) in order for it to be possible to transmit drive movements from the drive system (25) to the pivot arm (10) and sudden pressure changes (23) from the door leaf (2) to the drive system (25).

2. The pivoting and sliding door system (1) according to claim 1, **characterized in that** the drive system (25) comprises a locking disk piece (11), on which the locking pin (14) is fastened to protrude in the third direction (7), the locking disk piece (11) being mounted to rotate about a second axis of rotation (12) extending in parallel with the first axis of rotation (9) and being in engagement with a rotary disk piece (13), the rotary disk piece (13) being connected to the rotary column (8) in a torque-proof manner.

3. The pivoting and sliding door system (1) according to claim 2, **characterized in that**, when viewed in the first direction (5), the locking pin (14) is arranged in front of or behind the second axis of rotation (12) in the closed position (3).

4. The pivoting and sliding door system (1) according to claim 3, **characterized in that**, when viewed in the first direction (5), the locking pin (14) overlaps with the second axis of rotation (12) in the closed position (3).

5. The pivoting and sliding door system (1) according to claim 4, **characterized in that**, when viewed in the first direction (5), the locking pin (14) is arranged in front of the second axis of rotation (12) in the closed position (3) and a longitudinal axis (19) of the locking pin (14) overlaps with the second axis of rotation (12) in the closed position (3).

6. The pivoting and sliding door system (1) according to any one of claims 4 to 5, **characterized in that**, when viewed in the third direction (7), a tangent (t) to the contour of the guide link (15) extends at an angle to the second direction (6) at a contact point (31) with the locking pin (14) in the closed position (3).

7. The pivoting and sliding door system (1) according to claim 4, **characterized in that**, when viewed in the first direction (5), the locking pin (14) is arranged in front of the second axis of rotation (12) in the closed position (3) and, when viewed in the third direction (7), a first angle (a) between the first direction (5) and an imaginary connecting line between a longitudinal axis (19) of the locking pin (14) and the second axis of rotation (12) is between 0.1° and 5°.

8. The pivoting and sliding door system (1) according to any one of claims 2 to 7, **characterized in that** the locking pin (14) is arranged in a first end region (20) of the guide link (15) at least in portions in the closed position (3) and, when viewed in the first direction (5), the first end region (20) is arranged in front of the second axis of rotation (12) and overlaps therewith, and **in that** the locking pin (14) is arranged in a second end region (21) of the guide link (15) at least in portions in the open position (4) and, when viewed in the first direction (5), the second end region (21) is arranged between the first axis of rotation (9) and the second axis of rotation (12), and the first end region (20) is arranged behind the second axis of rotation (12) and overlaps therewith, the first end region (20) of the guide link (15) extending away from a first end (27) of a path (26) of the guide link (15) and the second end region (21) of the guide link (15) extending away from a second end (28) of the path (26) of the guide link (15), and the two end regions (20, 21) of the guide link (15) each covering at least 5%, preferably at least 10%, particularly preferably at least 20%, of the path (26) of the guide link (15).

9. The pivoting and sliding door system (1) according to any one of claims 2 to 8, **characterized in that** a path (26) of the guide link (15) has a concave curvature at least in portions relative to the second axis of rotation (12) in the open position (4), the path (26) preferably only being curved in a concave manner.

10. The pivoting and sliding door system (1) according to any one of claims 2 to 9, **characterized in that** the rotary disk piece (13) and the locking disk piece (11) comprise toothed portions, which are in engagement with one another.

11. The pivoting and sliding door system (1) according to any one of claims 1 to 10, **characterized in that** the guide link (15) has a path (26) that is curved at least in portions and/or has at least one bend.

12. The pivoting and sliding door system (2) according to any one of claims 1 to 11, **characterized in that** in the open position (4), when viewed in the third direction (7), a second angle (β) between a normal to the contour of the guide link (15) at a contact point (31) with the locking pin (14) and an imaginary connecting line between the contact point (31) and the second axis of rotation (12) is >0°, preferably >30°.

13. The pivoting and sliding door system (1) according to any one of claims 1 to 12, **characterized in that** a guide roller (16) is arranged in the end region (29) of the pivot arm (10) and is rotatable about a third axis of rotation (17), the third axis of rotation (17) being parallel to the third direction (7), the guide roller (16) being in engagement with a longitudinal guide (18) that extends in parallel with the second direction (6) and is rigidly connected to the door leaf (2).

14. A system comprising a carriage body (34) and at least one pivoting and sliding door system (1) according to any one of claims 1 to 13, wherein the drive system (25), in particular a locking disk piece (11) of the drive system (25), is supported on the carriage body (34), preferably by a bracket (30).

## Revendications

1. Système de porte coulissante et pivotante (1) pour un véhicule, en particulier un véhicule ferroviaire, comprenant un battant de porte (2), qui s'étend dans un plan et est mobile d'une position fermée (3) à une position ouverte (4), et vice versa, au moyen d'un mécanisme pivotant, la position fermée (3) et la position ouverte (4) étant à une distance l'une de l'autre dans une première direction (5), qui est normale par rapport au plan du battant de porte (2) et pointe de la position fermée (3) à la position ouverte (4), le battant de porte (2) étant mobile parallèlement à une deuxième direction (6) normale à la première direction (5) dans la position ouverte (4) et le mécanisme pivotant comprenant une colonne rotative (8), qui s'étend dans une troisième direction (7) normale à la première direction (5) et à la deuxième direction (6) et peut tourner autour d'un premier axe de rotation (9), qui est parallèle à la troisième direction (7), le mécanisme pivotant comprenant en outre un bras pivot (10) et un système d'entraînement (25) pour le bras pivot (10), le bras pivot (10) étant monté sur la colonne rotative (8) pour tourner autour de ladite colonne et étant accouplé de manière fonctionnelle au battant de porte (2) par une région d'extrémité (29), et le système d'entraînement (25) étant pourvu pour faire tourner le bras pivot (10) autour de la colonne rotative (8) afin d'amener le battant de porte (2) à se déplacer de la position fermée (3) à la position ouverte (4), et vice versa, **caractérisé en ce que** le bras pivot (10) comprend une la liaison guide (15) et le système d'entraînement (25) comprend une goupille de verrouillage (14) guidée dans la liaison guide (15) afin qu'il soit possible de transmettre des mouvements d'entraînement du système d'entraînement (25) au bras pivot (10) et des variations soudaines de pression (23) du battant de porte (2) au système d'entraînement (25).

2. Système de porte coulissante et pivotante (1) selon la revendication 1, **caractérisé en ce que** le système d'entraînement (25) comprend une pièce de disque de verrouillage (11), sur lequel la goupille de verrouillage (14) est fixée pour faire saillie dans la troisième direction (7), la pièce de disque de verrouillage (11) étant montée pour tourner autour d'un second axe de rotation (12) s'étendant parallèlement au premier axe de rotation (9) et étant en prise avec une pièce de disque rotative (13), la pièce de disque rotative (13) étant reliée à la colonne rotative (8) de manière fixe en rotation.

3. Système de porte coulissante et pivotante (1) selon la revendication 2, **caractérisé en ce que**, lorsqu'elle est vue dans la première direction (5), la goupille de verrouillage (14) est agencée devant ou derrière le second axe de rotation (12) dans la position fermée (3).

4. Système de porte coulissante et pivotante (1) selon la revendication 3, **caractérisé en ce que**, lorsqu'elle est vue dans la première direction (5), la goupille de verrouillage (14) est superposée au second axe de rotation (12) dans la position fermée (3).

5. Système de porte coulissante et pivotante (1) selon la revendication 4, **caractérisé en ce que**, lorsqu'elle est vue dans la première direction (5), la goupille de verrouillage (14) est agencée devant le second axe de rotation (12) dans la position fermée (3) et un axe longitudinal (19) de la goupille de verrouillage (14) se superpose au second axe de rotation (12) dans la position fermée (3).

6. Système de porte coulissante et pivotante (1) selon l'une quelconque des revendications 4 à 5, **caractérisé en ce que**, lorsqu'elle est vue dans la troisième direction (7), une tangente (t) au contour de la liaison guide (15) s'étend à un angle par rapport à la deuxième direction (6) au niveau d'un point de contact (31) avec la goupille de verrouillage (14) dans la position fermée (3).

7. Système de porte coulissante et pivotante (1) selon la revendication 4, **caractérisé en ce que**, lorsqu'elle est vue dans la première direction (5), la goupille de verrouillage (14) est agencée devant le second axe de rotation (12) dans la position fermée (3) et, lorsqu'elle est vue dans la troisième direction (7), un premier angle (α) entre la première direction (5) et une ligne de liaison imaginaire entre un axe longitudinal (19) de la goupille de verrouillage (14) et le second axe de rotation (12) est entre 0,1° et 5°.

8. Système de porte coulissante et pivotante (1) selon l'une quelconque des revendications 2 à 7, **caractérisé en ce que** la goupille de verrouillage (14) est agencée dans une première région d'extrémité (20) de la liaison guide (15) au moins par parties dans la position fermée (3) et, lorsqu'elle est vue dans la première direction (5), la première région d'extrémité (20) est agencée devant le second axe de rotation (12) et se superpose à celui-ci, et **en ce que** la goupille de verrouillage (14) est agencée dans une seconde région d'extrémité (21) de la liaison guide (15) au moins par parties dans la position ouverte (4) et, lorsqu'elle est vue dans la première direction (5), la seconde région d'extrémité (21) est agencée entre le premier axe de rotation (9) et le second axe de rotation (12), et la première région d'extrémité (20) est agencée derrière le second axe de rotation (12) et se superpose à celle-ci, la première région d'extrémité (20) de la liaison guide (15) s'étendant de manière à s'éloigner d'une première extrémité (27) d'un trajet (26) de la liaison guide (15) et la seconde région d'extrémité (21) de la liaison guide (15) s'étendant de manière à s'éloigner d'une seconde extrémité (28) du trajet (26) de la liaison guide (15), et les deux régions d'extrémité (20, 21) de la liaison guide (15) couvrant chacune au moins 5 %, de préférence au moins 10 %, particulièrement préférentiellement au moins 20 %, du trajet (26) de la liaison guide (15).

9. Système de porte coulissante et pivotante (1) selon l'une quelconque des revendications 2 à 8, **caractérisé en ce qu'**un trajet (26) de la liaison guide (15) a une courbure concave au moins par parties par rapport au second axe de rotation (12) dans la position ouverte (4), le trajet (26) étant de préférence uniquement incurvé de manière concave.

10. Système de porte coulissante et pivotante (1) selon l'une quelconque des revendications 2 à 9, **caractérisé en ce que** la pièce de disque rotative (13) et la pièce de disque de verrouillage (11) comprennent des parties dentées, qui sont en prise les unes avec les autres.

11. Système de porte coulissante et pivotante (1) selon l'une quelconque des revendications 1 à 10, **caractérisé en ce que** la liaison guide (15) a un trajet (26) qui est incurvé au moins par parties et/ou a au moins un coude.

12. Système de porte coulissante et pivotante (2) selon l'une quelconque des revendications 1 à 11, **caractérisé en ce que** lorsqu'il est vu dans la troisième direction (7), un second angle (β) entre une normale au contour de la liaison guide (15) est > 0°, de préférence > 30°, au niveau d'un point de contact (31) avec la goupille de verrouillage (14) et une ligne de liaison imaginaire entre le point de contact (31) et le second axe de rotation (12) dans la position ouverte (4).

13. Système de porte coulissante et pivotante (1) selon l'une quelconque des revendications 1 à 12, **caractérisé en ce qu'**un galet-guide (16) est agencé dans la région d'extrémité (29) du bras pivot (10) et peut tourner autour d'un troisième axe de rotation (17), le troisième axe de rotation (17) étant parallèle à la troisième direction (7), le galet-guide (16) étant en prise avec un guide longitudinal (18) qui s'étend en parallèle à la deuxième direction (6) et est accouplé de manière rigide au battant de porte (2).

14. Système comprenant une caisse de voiture (34) et au moins un système de porte coulissante et pivotante (1) selon l'une quelconque des revendications 1 à 13, dans lequel le système d'entraînement (25), en particulier une pièce de disque de verrouillage (11) du système d'entraînement(25), est soutenu sur la caisse de voiture (34), de préférence par un support (30).
